(19) **Europäisches Patentamt / European Patent Office / Office européen des brevets**

(11) **EP 3 510 686 B1**

(12) **FASCICULE DE BREVET EUROPEEN**

(45) Date de publication et mention
de la délivrance du brevet:
**06.11.2019 Bulletin 2019/45**

(21) Numéro de dépôt: **17811202.5**

(22) Date de dépôt: **15.11.2017**

(51) Int Cl.:
**H02J 7/00** (2006.01)     **H02J 7/34** (2006.01)

(86) Numéro de dépôt international:
**PCT/EP2017/079250**

(87) Numéro de publication internationale:
**WO 2018/091490 (24.05.2018 Gazette 2018/21)**

(54) **SYSTÈME D'ÉQUILIBRAGE GLOBAL ANALOGIQUE POUR UN ENSEMBLE DE DISPOSITIFS DE STOCKAGE D'ÉNERGIE ÉLECTRIQUE PAR EFFET CAPACITIF, MODULE DE STOCKAGE RECHARGEABLE, VÉHICULE ET INSTALLATION ÉLECTRIQUES COMPRENANT UN TEL SYSTÈME**

SYSTEM ZUM ANALOGEN ALLGEMEINEN AUSGLEICHEN FÜR EINE ANORDNUNG AUS VORRICHTUNGEN ZUR SPEICHERUNG VON ELEKTRISCHER ENERGIE MIT KAPAZITIVEM EFFEKT, WIEDERAUFLADBARES SPEICHERMODUL, ELEKTROFAHRZEUG UND ELEKTRISCHE ANLAGE MIT SOLCH EINEM SYSTEM

ANALOGUE OVERALL BALANCING SYSTEM FOR AN ASSEMBLY OF CAPACITIVE-EFFECT ELECTRICAL ENERGY STORAGE DEVICES, RECHARGEABLE STORAGE MODULE, ELECTRIC VEHICLE AND ELECTRICAL INSTALLATION COMPRISING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2016 FR 1661243**

(43) Date de publication de la demande:
**17.07.2019 Bulletin 2019/29**

(73) Titulaire: **Blue Solutions**
**29500 Ergué Gabéric (FR)**

(72) Inventeur: **DEPOND, Jean-Michel**
**29000 Quimper (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**EP-A1- 1 583 200        EP-A1- 3 051 659**
**US-A1- 2004 251 934**

**Description**

La présente invention concerne un système d'équilibrage analogique pour un ensemble de dispositifs de stockage par effet capacitif reliés entre eux en série. Elle concerne également un module de stockage d'énergie électrique rechargeable, un véhicule électrique et une installation d'alimentation électrique mettant en œuvre un tel système.

Le domaine de l'invention est le domaine des moyens d'équilibrage de supercondensateurs reliés en série.

**Etat de la technique**

Un supercondensateur réalise un stockage d'énergie électrique par effet capacitif. La principale limitation d'un supercondensateur est de ne fonctionner qu'à très basse tension. Pour atteindre la tension de fonctionnement souhaitée, les supercondensateurs sont mis en série dans un module de stockage d'énergie électrique rechargeable.

Cependant, du fait des différences de fabrication ou des différences de vieillissement, les supercondensateurs d'un même module de stockage ne se chargent que rarement à la même vitesse. Pour assurer une plus grande homogénéité de tension aux bornes des supercondensateurs en série, un système d'équilibrage est prévu, sous une forme analogique pour des questions de coût, de fiabilité, de faisabilité et de robustesse.

Ce système d'équilibrage analogique prévoit, lors d'une phase de charge, de dériver au moins une partie du courant pour chaque supercondensateur, de manière individuelle, lorsque la tension à ses bornes dépasse une tension prédéterminée dite tension d'équilibrage. A la fin de la phase de charge, si la tension d'équilibrage est dépassée pour l'ensemble des supercondensateurs, ce qui est généralement le cas, tous les supercondensateurs sont donc dérivés.

Ainsi, lorsque la phase de charge n'est pas immédiatement suivie d'une phase de décharge, mais d'une phase de maintien en tension ou d'une phase de repos, chaque supercondensateur reste dérivé et se décharge dans le circuit de dérivation, tant que la tension à ses bornes est supérieure à la tension d'équilibrage. Autrement dit, pendant une phase de maintien en tension, ou de repos, séparant une phase de charge d'une phase de décharge, les supercondensateurs se déchargent dans le circuit de dérivation alors qu'ils ne sont pas utilisés. De ce fait une perte d'énergie se produit, compensée dans le cas d'une phase de maintien en tension, non compensée dans le cas une phase de repos, ce qui est coûteux dans tous les cas, diminue l'efficacité et l'autonomie des supercondensateurs, et donc du module de stockage. Les documents EP 1 583 200 A1, EP 3 051 659 A1 et US 2004/251934 A1 décrivent un système d'équilibrage analogique d'un ensemble de stockage d'énergie électrique rechargeable selon le préambule de la revendication 1.

Un but de la présente invention est de remédier à ces inconvénients.

Un autre but de l'invention est de proposer un système d'équilibrage plus efficace pour un ensemble de dispositifs de stockage par effet capacitif en série.

Il est aussi un but de l'invention de proposer un système d'équilibrage pour un ensemble de dispositifs de stockage par effet capacitif en série permettant de diminuer, voire annuler, les pertes d'énergie, et d'augmenter l'efficacité et l'autonomie dudit ensemble.

**Exposé de l'invention**

L'invention permet d'atteindre au moins l'un de ces buts par un système d'équilibrage analogique d'un ensemble de stockage d'énergie électrique comprenant une pluralité de dispositifs de stockage par effet capacitif reliés entre eux en série, ledit système comprenant un dispositif d'équilibrage pour chaque dispositif de stockage, ledit dispositif d'équilibrage comportant :

- un circuit de dérivation dudit dispositif de stockage, commandable entre un état fermé et un état ouvert, et
- un comparateur de tension, dit premier comparateur, agencé pour commander ledit circuit de dérivation, dans un état ouvert ou fermé, en fonction de la tension aux bornes dudit dispositif de stockage et d'une tension prédéterminée, dite tension d'équilibrage, notée $V_{eq}$ dans la suite ;

ledit système étant caractérisé en ce qu'il comprend en outre au moins un autre comparateur de tension, dit deuxième comparateur, agencé pour commander un état ouvert, ou fermé, du circuit de dérivation de chaque dispositif de stockage, en fonction :

- d'une tension, dite tension de décommutation, représentative d'un état fermé de tous les circuits de dérivation de tous les dispositifs de stockage dudit ensemble, et
- de la tension aux bornes de chaque dispositif de stockage dudit ensemble, ou de la tension aux bornes dudit ensemble.

Ainsi, le système selon l'invention prévoit de décommuter, c'est-à-dire faire passer dans un état ouvert, le circuit de dérivation de chaque dispositif de stockage, lorsque tous les circuits de dérivation de tous les dispositifs de stockage sont dans un état commuté, c'est-à-dire un état fermé. Ainsi, le système selon l'invention permet d'éviter que tous les dispositifs de stockage restent dérivés, par des circuits de dérivation de courant, après une phase de charge. De ce fait, le système selon l'invention permet d'éviter que, entre une phase de charge et une phase de décharge, tous les dispositifs de stockage se déchargent dans les circuits de dérivation, et en particulier dans les résistances de dérivation desdits circuits de dérivation.

Par conséquent, le système selon l'invention permet de réaliser un équilibrage plus efficace, de diminuer les pertes d'énergie, et d'augmenter l'efficacité et l'autonomie de l'ensemble de stockage.

De plus, la commande de tous les circuits de dérivation est réalisée, de manière centralisée, par le deuxième comparateur qui est commun à l'ensemble des dispositifs de stockage. Le système selon l'invention présente donc un coût et un encombrement réduits.

Dans la présente demande, on entend par « dispositif de stockage par effet capacitif », également appelé « dispositif de stockage », un dispositif comprenant, ou formé par, un ou plusieurs supercondensateurs reliés entre eux en série ou en parallèle.

Dans la plupart des cas, mais de manière non limitative, chaque dispositif de stockage par effet capacitif comprend un seul supercondensateur.

Suivant une première configuration, le premier comparateur reçoit directement la tension $V_i$ aux bornes du dispositif de stockage. Dans ce cas, il compare directement les tensions $V_i$ et $V_{eq}$.

Alternativement, un diviseur de tension peut être utilisé pour adapter la tension $V_i$ en entrée du premier comparateur. Le premier comparateur reçoit alors une tension d'entrée $V_i^E$ telle que $V_i^E = V_i/D_i$. Dans ce cas, le premier comparateur compare la tension $V_i^E$ à une tension, dite de référence, notée $V_{ref}$, choisie telle que $V_{ref} = V_{eq}/D_i$.

Préférentiellement, lorsque $2\,V \leq V_{eq} \leq 3\,V$, l'ensemble de dispositifs de stockage peut comprendre un nombre n de dispositifs de stockage en série, tel que $8 \leq n \leq 14$, et en particulier $10 \leq n \leq 12$.

Suivant une caractéristique particulièrement avantageuse, le deuxième comparateur peut être référencé aux potentiels aux bornes de l'ensemble de stockage, et est configuré pour fournir en sortie :

- dans un premier état : le plus petit potentiel aux bornes de l'ensemble de stockage, noté $V_1^-$ ; et
- dans un deuxième état : le plus grand potentiel aux bornes de l'ensemble de stockage, noté $V_n^+$.

Ainsi, la deuxième comparateur est référencé et s'adapte à la variation, dans le temps, de la tension aux bornes de l'ensemble de stockage, ce qui permet de réaliser un équilibrage plus efficace et plus précis.

De plus, il n'est pas nécessaire de prévoir une source de tension additionnelle pour référencer le deuxième comparateur, ce qui diminue le coût et l'encombrement du système selon l'invention.

Enfin, ce mode de réalisation présente l'avantage de travailler dans une plage de tensions qui ne dépasse pas la tension maximale aux bornes de l'ensemble de stockage, ce qui permet l'utilisation de composants moins coûteux et moins encombrants comparés aux composants fonctionnant à très haute tension.

Avantageusement, le système selon l'invention peut comprendre un sommateur pondéré, recevant la tension fournie par chacun des premiers comparateurs, notée $V_i^s$, et fournissant une tension, notée $V_\Sigma^S$, correspondant à une somme pondérée desdites tensions, ladite tension de somme pondérée $V_\Sigma^S$ étant utilisée par le deuxième comparateur pour commander tous les circuits de dérivation.

Alternativement, le sommateur pondéré peut recevoir la tension aux bornes de chaque dispositif de stockage, et fournir une tension $V_\Sigma^S$ correspondant à une somme pondérée desdites tensions, ladite tension de somme pondérée étant utilisée par le deuxième comparateur pour commander tous les circuits de dérivation.

Ainsi, le deuxième comparateur réalise une comparaison d'une somme pondérée de tensions relatives à tous les dispositifs de stockage avec la tension de décommutation.

Le fait de pondérer les tensions, permet de travailler dans une plage de tensions confortable, évitant l'utilisation de composants très haute tension qui sont des composants coûteux, complexes et encombrants.

Avantageusement, la pondération peut être réalisée en fonction du nombre de dispositifs de stockage dans l'ensemble de stockage.

En particulier, pour n dispositifs de stockage identiques présentant une même tension d'équilibrage $V_{eq}$, la pondération peut être fonction d'un coefficient de pondération, noté $k$, obtenue par la relation suivante :

$$k = \sum_{i=1}^{n} \frac{1}{i}$$

Avantageusement, le sommateur pondéré peut être référencé aux potentiels aux bornes de l'ensemble de stockage, et fournit une tension de somme pondérée inférieure ou égale à la différence entre lesdits potentiels.

Ainsi, la tension maximale fournie par le sommateur pondérée est inférieure ou égale à la tension aux bornes de l'ensemble de stockage, ce qui permet de travailler dans une plage de tensions sans utilisation de composants coûteux et encombrants.

Le système selon l'invention peut avantageusement comprendre un moyen d'introduction d'une tension, dite de compensation, correspondant à un décalage de tension introduit au niveau d'au moins un des, en particulier de tous les, premiers comparateurs.

Un tel décalage de tension peut être dû à l'architecture et aux différences de fonctionnement des premiers comparateurs.

Un tel moyen d'introduction d'une tension de compensation peut se trouver au niveau du sommateur pondéré, sous la forme d'une branche additionnelle en entrée du sommateur pondéré, introduisant ladite tension de compensation.

Un tel moyen d'introduction d'une tension de compensation peut être un deuxième sommateur, disposé en cascade en sortie ou en aval du sommateur pondéré. Un tel deuxième sommateur peut sommer la tension de somme pondérée fournie par le sommateur pondéré avec une tension de compensation, cette dernière pouvant être fournie par une source de tension prévue à cet effet.

Selon encore une autre alternative, cette tension de compensation peut être prise en compte dans la détermination de la tension de décommutation.

Suivant un mode de réalisation, le système selon l'invention peut comprendre un moyen fournissant la tension de décommutation, notée $V_\Sigma$, en fonction de la tension aux bornes de l'ensemble de stockage, et éventuellement d'une tension représentant une marge de sécurité.

Suivant un exemple de réalisation particulier, mais nullement limitatif, le moyen fournissant la tension de décommutation peut comprendre un soustracteur, référencé aux potentiels aux bornes de l'ensemble de stockage, fournissant la tension de décommutation en fonction de la tension aux bornes de l'ensemble de stockage et de la tension représentant une marge de sécurité.

En particulier, le soustracteur peut être agencé pour fournir la tension de décommutation selon la relation suivante :

$$V_\Sigma = V - \delta V$$

avec V la tension aux bornes de l'ensemble de stockage, c'est-à-dire $V = V_n^+ - V_1^-$, et $\delta V$ la tension représentant la marge de sécurité.

Pour au moins un, en particulier chaque, dispositif de stockage, le premier comparateur du dispositif d'équilibrage dudit dispositif de stockage peut être référencé aux potentiels aux bornes dudit dispositif de stockage.

Avantageusement, pour au moins un, en particulier chaque, dispositif de stockage, le premier comparateur du dispositif d'équilibrage dudit dispositif de stockage peut être agencé de sorte que :

- son entrée positive est reliée au plus grand potentiel aux bornes dudit dispositif de stockage directement, respectivement par l'intermédiaire d'un diviseur de tension,
- son entrée négative est reliée à une source de tension, elle-même référencée au plus petit potentiel aux bornes dudit dispositif de stockage, et fournissant la tension d'équilibrage, respectivement une tension de référence.

Avantageusement, le système selon l'invention peut comprendre pour au moins un, en particulier chaque, dispositif de stockage un diviseur de tension fournissant au premier comparateur, une tension d'entrée, notée $V_i^E$, proportionnelle et inférieure à la tension $V_i$ aux bornes dudit dispositif de stockage, de sorte que $V_i^E = V_i/D_i$. Ainsi, il est possible d'utiliser une source de tension fournissant une tension $V_{ref} = V_{eq}/D_i$, existante sur le marché pour la comparaison réalisée par le premier comparateur.

En effet, d'un point de vue pratique, les sources de tension en électronique analogique ont des valeurs déterminées et fixes. Elles ne fournissent donc pas nécessairement la tension d'équilibrage souhaitée $V_{eq}$.

Comme précisé plus haut, lorsque le premier comparateur reçoit en entrée la tension $V_i$ aux bornes du dispositif de stockage, notée $DC_i$ dans la suite, sans utilisation d'un diviseur de tension, alors le premier comparateur réalise une comparaison entre ladite tension $V_i$ et la tension d'équilibrage $V_{eq}$.

Lorsque le premier comparateur reçoit en entrée une tension d'entrée $V_i^E$ fournie par un diviseur de tension, appliquant un coefficient de division $D_i$ à la tension $V_i$ aux bornes du dispositif de stockage $DC_i$ de sorte que :

$$V_i^E = \frac{V_i}{D_i}$$

alors le premier comparateur réalise une comparaison entre ladite tension d'entrée $V_i^E$ et une tension de référence, notée $V_{ref}$, telle que :

$$V_{ref} = \frac{V_{eq}}{D_i}$$

Suivant un exemple de réalisation non limitatif, chaque diviseur de tension peut être réalisé par des ponts de résistances.

De plus, l'un au moins, et en particulier chacun, des premier et deuxième comparateurs peut être un comparateur à hystérésis.

Un tel comparateur à hystérésis permet d'éviter le phénomène de bagotage du signal de commande fourni par ledit comparateur.

Suivant un premier exemple de réalisation, au moins un, en particulier chaque, circuit de dérivation peut comprendre deux commutateurs, montés en série dans ledit circuit de dérivation, l'un commandé en fonction de la tension fournie par le premier comparateur et l'autre commandé en fonction de la tension fournie par le deuxième comparateur.

Alternativement, ou en plus, au moins un, en particulier chaque, circuit de dérivation peut comprendre un unique commutateur, le dispositif d'équilibrage comprenant en outre un moyen de commande dudit unique commutateur, en fonction des tensions fournies par les premier et deuxième comparateurs.

Ainsi, le coût, la consommation électrique et l'encombrement du système selon l'invention sont diminués.

Suivant un premier exemple de réalisation, pour au moins un, en particulier chaque dispositif d'équilibrage, le moyen de commande du commutateur unique peut comprendre :

- un transistor bloqué par défaut, par exemple un transistor bipolaire de type NPN, en particulier lorsque le deuxième comparateur est un comparateur inverseur, ou
- un transistor passant par défaut, par exemple un transistor bipolaire de type PNP, en particulier lorsque le deuxième comparateur est un comparateur non-inverseur.

Dans le cas où un transistor bipolaire est utilisé alors la base dudit transistor bipolaire est reliée au deuxième comparateur, le collecteur au premier comparateur et l'émetteur à l'unique commutateur.

Dans ce cas, la tension de l'émetteur du transistor, notée $V_i^c$ peut être utilisée pour commander le commutateur unique associé au dispositif de stockage $DC_i$.

Suivant une caractéristique particulièrement avantageuse, le système selon l'invention peut en outre comprendre un dispositif de surveillance du fonctionnement dudit système d'équilibrage, et éventuellement signaler un défaut de fonctionnement dudit système.

Suivant un premier mode de réalisation, le dispositif de surveillance réalise une surveillance du fonctionnement dudit système d'équilibrage en fonction de la tension fournie par le deuxième comparateur.

Un tel dispositif peut être agencé pour surveiller la variation de la tension de commande fournie par le deuxième comparateur, et en particulier pour déterminer si cette tension atteint une première valeur prédéfinie pour décommuter les circuits de dérivation, puis une deuxième valeur prédéfinie obtenue lorsqu'au moins un circuit est décommuté, etc.

Suivant un deuxième mode de réalisation, et lorsque le circuit de dérivation de chaque dispositif d'équilibrage comprend un unique commutateur commandé par un moyen de commande dudit unique commutateur en fonction des tensions fournies par les premier et deuxième comparateurs, le dispositif de surveillance du fonctionnement dudit système peut réaliser une surveillance en fonction des tensions de commande desdits commutateurs uniques de tous les dispositifs d'équilibrage.

En particulier, le dispositif de commande peut être réalisé par comparaison, à une tension de seuil, de la somme pondérée des tensions de commande. La tension de seuil peut être la tension aux bornes de l'ensemble de stockage.

Suivant un exemple de réalisation non limitatif, le dispositif de surveillance peut réaliser la comparaison suivante, par un comparateur référencé aux potentiels aux bornes de l'ensemble de stockage :

$$V_{\Sigma}^c \leq \left(1 - \frac{k}{n}\right) V_n^+$$

avec $V_\Sigma^c$ la somme pondérée des tensions de commande, $\left(1 - \dfrac{k}{n}\right)$ un coefficient de pondération et $V_n^+$ la tension de seuil, cette tension correspondant également à la tension aux bornes de l'ensemble de stockage.

Pour ce faire, le dispositif de surveillance peut comprendre un sommateur pondéré, dit deuxième sommateur pondéré, et un comparateur de tension, dit troisième comparateur, tous deux référencés aux potentiels aux bornes de l'ensemble de stockage.

Suivant un troisième mode de réalisation, et lorsque le circuit de dérivation de chaque dispositif d'équilibrage comprend un unique commutateur commandé par un moyen de commande dudit unique commutateur, le dispositif de surveillance du fonctionnement dudit système peut réaliser une surveillance en fonction :

- de la tension de commande dudit commutateur unique, et
- de la tension fournie par le premier comparateur ; de chaque dispositif d'équilibrage.

En particulier, dans un exemple de réalisation nullement limitatif de ce troisième mode de réalisation, le dispositif de surveillance peut comprendre, pour chaque dispositif d'équilibrage :

- un commutateur commandable, dit quatrième commutateur, et
- un comparateur, dit quatrième comparateur, pour commander ledit quatrième commutateur commandable.

Tous les quatrièmes commutateurs peuvent être reliés en série entre eux entre deux potentiels électriques différents, tels que par exemple les potentiels aux bornes de l'ensemble de stockage.

Chaque quatrième comparateur, associé à un dispositif d'équilibrage, réalise une comparaison :

- de la tension de commande du commutateur unique du dispositif d'équilibrage, et
- de la tension fournie par le premier comparateur dudit dispositif d'équilibrage,

pour commander le quatrième commutateur commandable qui lui est associé, en fonction de ladite comparaison.

Chaque couple (4ème commutateur + 4ème comparateur) associé à un dispositif d'équilibrage peut être configuré de sorte que le 4ème commutateur est commandé dans un état fermé lorsque le commutateur unique dudit dispositif d'équilibrage passe dans un état fermé.

En particulier :

- chaque 4ème comparateur peut être un comparateur inverseur, respectivement un comparateur non inverseur ; et
- chaque 4ème commutateur peut être un transistor bloqué par défaut, par exemple un transistor bipolaire de type NPN, respectivement un transistor passant par défaut, par exemple un transistor bipolaire de type PNP.

Suivant un autre aspect de la même invention, il est proposé un module de stockage d'énergie électrique rechargeable comprenant :

- au moins un ensemble de stockage d'énergie électrique rechargeable, comprenant, chacun, une pluralité de dispositifs de stockage d'énergie électrique par effet capacitif reliés entre eux en série au sein dudit ensemble, et
- pour au moins un, en particulier chaque, ensemble de stockage, un système d'équilibrage selon l'invention.

Le module de stockage d'énergie peut comprendre plusieurs ensembles de stockage.

Au moins deux, en particulier tous les, ensembles peuvent être disposés en série entre eux. Alternativement, ou en plus, au moins deux, en particulier tous les, ensembles peuvent être disposés en parallèle entre eux.

Au moins deux, en particulier tous les, ensembles peuvent comprendre un nombre identique, ou un nombre différent de dispositifs de stockage.

Suivant un autre aspect de la présente invention, il est proposé un véhicule de transport, hybride ou électrique, comprenant un ou plusieurs module(s) de stockage d'énergie électrique rechargeable(s) selon l'invention.

Par « véhicule de transport », on entend tout type de moyen de transport de personnes ou d'objets, tel qu'un bus, une voiture, un tram-bus, un bateau, un camion, un téléphérique, un ascenseur, un monte-charge, une grue, etc.

Suivant encore un autre aspect de la même invention, il est proposé une installation électrique comprenant un ou plusieurs module(s) de stockage d'énergie électrique rechargeable(s) selon l'invention.

Une telle installation électrique peut être une station de charge électrique pour véhicules de transport, électriques ou hybrides, ou une station d'alimentation électrique d'un bâtiment, d'un complexe ou d'un appareil électrique/électronique de communication.

Une telle installation électrique peut être une station de régulation ou de lissage, ou encore de stockage tampon, d'énergie électrique, par exemple fournie par un réseau électrique ou des moyens de production d'électricité. Une telle station de régulation ou de lissage permet de stocker de l'énergie électrique en surplus lors d'une période de faible consommation, respectivement de forte production, et de restituer l'énergie électrique stockée lors d'une période de forte consommation, respectivement faible production.

Avantageusement, l'installation selon l'invention peut comprendre un moyen de production d'énergie électrique à partir d'une source renouvelable, tel qu'au moins un panneau solaire et/ou au moins une éolienne et/ou au moins une hydrolienne.

L'énergie produite par un tel moyen peut être utilisée pour recharger au moins un module de stockage d'énergie électrique rechargeable.

Alternativement, ou en plus, au moins un module de stockage d'énergie électrique rechargeable peut être rechargé depuis le secteur.

## Description des figures et modes de réalisation

D'autres avantages et caractéristiques apparaîtront à l'examen de la description détaillée de modes de réalisation nullement limitatifs, et des dessins annexés sur lesquels :

- les FIGURES 1a et 1b représentent des schémas de principe de deux exemples de réalisation d'un système d'équilibrage à résistance commandée selon l'état de la technique ;
- la FIGURE 2 est une représentation du schéma de principe d'un premier exemple de réalisation d'un système d'équilibrage à résistance commandée selon l'invention ;
- la FIGURE 3 est une représentation du schéma de principe d'un deuxième exemple de réalisation d'un système d'équilibrage à résistance commandée selon l'invention ;
- la FIGURE 4 est une représentation du schéma de principe d'un exemple de module fournissant une tension relative à l'état commuté ou non de tous les circuits de dérivation de tous les dispositifs de stockage, et pouvant être mis en œuvre dans le système selon l'invention ;
- la FIGURE 5 est une représentation du schéma de principe d'un exemple de module de compensation d'un décalage pouvant se produire au niveau des tensions fournies par les premiers comparateurs du système selon l'invention, et pouvant être mis en œuvre dans le système selon l'invention ;
- la FIGURE 6 est une représentation du schéma de principe d'un exemple de module fournissant la tension de décommutation, et pouvant être mis en œuvre dans le système selon l'invention ;
- la FIGURE 7 est une représentation schématique d'un exemple de réalisation non limitatif d'un module de surveillance du fonctionnement d'un système selon l'invention ;
- la FIGURE 8 est une représentation schématique d'un autre exemple de réalisation non limitatif d'un module de surveillance du fonctionnement d'un système selon l'invention ;
- la FIGURE 9 est une représentation schématique d'un exemple de réalisation non limitatif d'un module de stockage selon l'invention ; et
- les FIGURES 10a-10d sont des exemples de réalisation non limitatifs d'un dispositif de stockage d'énergie électrique par effet capacitif.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

Dans les exemples suivants, mais de manière nullement limitative pour l'invention, on considère que tous les dispositifs de stockage $DC_i$ sont identiques et ont la même tension d'équilibrage $V_{eq}$. Bien entendu, l'invention n'est pas limitée à ces exemples et il est possible d'utiliser des dispositifs de stockage $DC_i$ qui sont différents les uns des autres et qui ne présentent pas la même tension d'équilibrage.

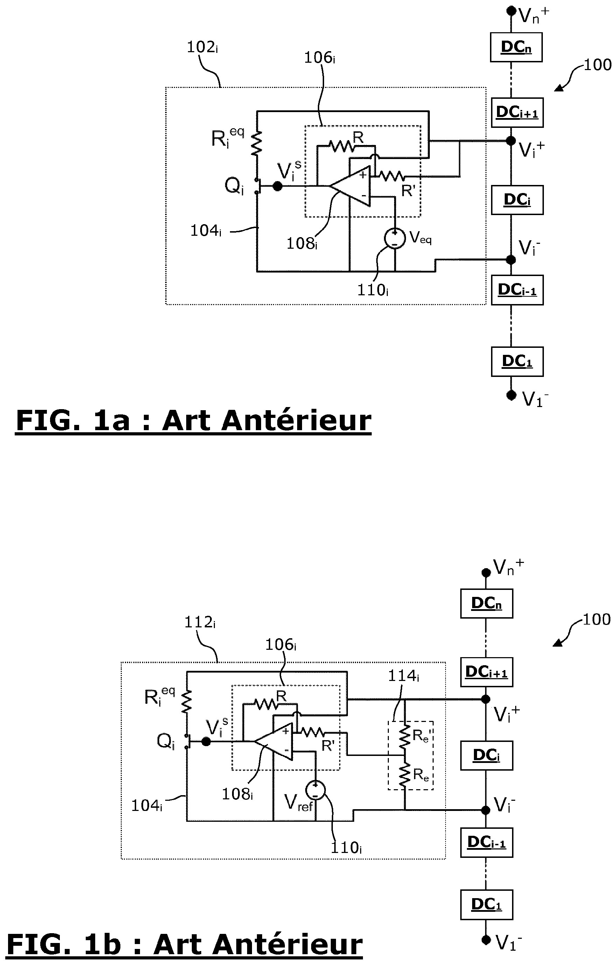

Les FIGURES 1a et 1b sont des représentations des schémas électriques de principe de deux exemples de système d'équilibrage à résistance commandée selon l'état de la technique.

Sur les FIGURES 1a et 1b est représenté un ensemble de stockage 100 comprenant n dispositifs de stockage par effet capacitif $DC_1$, ..., $DC_n$ reliés entre eux en série et identiques. Le dispositif de stockage $DC_1$ se trouve du côté du plus petit potentiel électrique, noté $V_1^-$, de l'ensemble de stockage 100 et le dispositif de stockage $DC_n$ se trouve du côté du plus grand potentiel électrique, noté $V_n^+$, de l'ensemble de stockage 100.

Le système représenté sur les FIGURES 1a et 1b comprend un dispositif d'équilibrage à résistance commandée associé à chaque dispositif de stockage $DC_i$.

Dans la suite, pour ne pas alourdir les schémas, seul le dispositif d'équilibrage $102_i$, associé au dispositif de stockage $DC_i$, est représenté sur les FIGURES 1a et 1b. Les dispositifs d'équilibrage des autres dispositifs de stockage de l'ensemble de stockage 100 sont sur le même principe que le dispositif d'équilibrage $102_i$, représenté sur les FIGURES 1a et 1b, et en particulier identiques au dispositif d'équilibrage $102_i$ dans le cas où les dispositifs de stockage $DC_i$ présentent une même tension d'équilibrage $V_{eq}$.

Le dispositif d'équilibrage $102_i$ comprend un circuit de dérivation $104_i$, relié en parallèle aux bornes du dispositif de stockage $DC_i$, et comportant un commutateur $Q_i$ en série avec une résistance d'équilibrage $R_i^{eq}$.

Le dispositif d'équilibrage $102_i$ comprend également un comparateur à hystérésis $106_i$, dit premier comparateur, pour commander l'état du commutateur $Q_i$. Le premier comparateur $106_i$ est formé par un amplificateur opérationnel $108_i$ et deux résistances R et R' dont les valeurs fixent la largeur de l'hystérésis. Les résistances R et R' sont choisies suffisamment grandes pour que le courant qui les traverse soit négligeable, typiquement $R > 10\ k\Omega$ et $R' > 10\ k\Omega$.

L'amplificateur opérationnel $108_i$ est référencé aux potentiels, notés $V_i^+$ et $V_i^-$, aux bornes du dispositif de stockage $DC_i$ auquel est associé le dispositif d'équilibrage $102_i$.

Dans l'exemple représenté sur la FIGURE 1a, l'entrée positive (+) de l'amplificateur opérationnel $108_i$ est reliée au plus grand potentiel, noté $V_i^+$, aux bornes du dispositif de stockage $DC_i$ auquel est associé le dispositif d'équilibrage $102_i$. L'entrée négative (-) de l'amplificateur opérationnel $108_i$ est reliée à une source de tension $110_i$, elle-même référencée au plus petit potentiel noté $V_i^-$, aux bornes du dispositif de stockage $DC_i$.

Dans l'exemple représenté sur la FIGURE 1a, la source de tension $110_i$ fournit la tension d'équilibrage $V_{eq}$ à laquelle on souhaite dériver le dispositif de stockage $DC_i$.

Dans ce cas, le comparateur $106_i$ compare directement la tension $V_i$ aux bornes du dispositif de stockage $DC_i$ à la tension d'équilibrage $V_{eq}$, et fonctionne de la manière suivante :

- si $V_i\ (=V_i^+-V_i^-) < V_{eq}$ alors la tension fournie par le premier comparateur $106_i$, notée $V_i^s$, est égale à $V_i^-\ (= -V_{sat}$ local) : autrement dit, si la tension $V_i$ aux bornes du dispositif de stockage $DC_i$ est inférieure à la tension d'équilibrage $V_{eq}$ alors $V_i^s = V_i^-$ ; et
- si $V_i\ (=V_i^+-V_i^-) \geq V_{eq}$ alors $V_i^s=V_i^+\ (= +V_{sat}$ local).

La tension $V_i^s$ est utilisée pour commander le commutateur $Q_i$ dans un état fermé ou dans un état ouvert.

Dans l'exemple représenté sur la FIGURE 1a, le commutateur $Q_i$ peut être un transistor MOSFET à canal N dont la grille reçoit la tension $V_i^s$ :

- lorsque $V_i^s$ vaut $V_i^-$ (c'est-à-dire lorsque la tension $V_i$ aux bornes du dispositif de stockage $DC_i$ est inférieure à la tension d'équilibrage $V_{eq}$) alors la tension Grille-Source est nulle et le commutateur $Q_i$ est bloqué/ouvert : le circuit de dérivation $104_i$ est ouvert et ne conduit aucun courant ; et
- lorsque $V_i^s$ vaut $V_i^+$ (c'est-à-dire lorsque la tension $V_i$ aux bornes du dispositif de stockage $DC_i$ est supérieure ou égale à la tension d'équilibrage $V_{eq}$) alors la tension Grille-Source est non nulle et le commutateur $Q_i$ est passant/fermé : le circuit de dérivation $104_i$ est fermé et conduit du courant qui passe dans la résistance d'équilibrage $R_i^{eq}$.

La FIGURE 1b donne un autre exemple de réalisation d'un dispositif d'équilibrage à résistance commandée. Le dispositif d'équilibrage $112_i$, de la FIGURE 1b, comprend un diviseur de tension $114_i$, disposé en dérivation aux bornes du dispositif de stockage $DC_i$ et formé par des résistances $R_e$ et $R_e'$. Le diviseur de tension $114_i$ est utilisé pour adapter la tension $V_i$ ($V_i = V_i^+-V_i^-$), aux bornes du dispositif de stockage $DC_i$. En effet, d'un point de vue pratique, les sources de tension en électronique analogique ont des valeurs déterminées et fixes. Elles ne correspondent donc pas nécessairement à la valeur de la tension d'équilibrage souhaitée $V_{eq}$ pour le dispositif de stockage $DC_i$. Ainsi, le commutateur $106_i$ reçoit en entrée, non pas la tension $V_i$, mais une tension d'entrée $V_i^E$ telle que $V_i^E=V_i/D$, avec D le coefficient de division appliqué par le diviseur de tension $114_i$ tel que :

$$D = \frac{R_e + R'_e}{R_e}$$

Dans ce cas, la source $110_i$ fournit, non pas la tension d'équilibrage $V_{eq}$, mais une tension de référence, notée $V_{ref}$, telle que $V_{ref}=V_{eq}/D$.

Autrement dit, on a :

$$\frac{R_e}{R_e + R_e'} = \frac{V_{ref}}{V_{eq}}$$

Autrement dit, dans l'exemple de réalisation $V_{ref} \neq V_{eq}$ et

$$V_{ref} = V_{eq} \left( \frac{R_e}{R_e + R_e'} \right)$$

Le dispositif d'équilibrage $112_i$, représenté sur la FIGURE 1b, comprend par ailleurs tous les éléments du dispositif d'équilibrage $102_i$ de la FIGURE 1a.

A la différence du dispositif $102_i$ de la FIGURE 1a, dans le dispositif $112_i$ de la FIGURE 1b, l'entrée positive (+) de l'amplificateur opérationnel $108_i$ est reliée audit diviseur de tension $114_i$. Les résistances $R_e$ et $R_e'$, formant le diviseur de tension, sont choisies suffisamment grandes pour que le courant qui les traverse soit négligeable, typiquement $R_e > 10\ k\Omega$ et $R_e' > 10\ k\Omega$.

Dans ce cas, le comparateur de tension $106_i$ réalise une comparaison :

- de la tension de référence $V_{ref}$ (et non pas de la tension $V_{eq}$)
- à la tension d'entrée $V_i^E$, fournie par le diviseur de tension $114_i$.

Dans les exemples décrits, le comparateur $106_i$ est un comparateur à hystérésis. Alternativement, le comparateur $106_i$ peut ne pas être un comparateur à hystérésis.

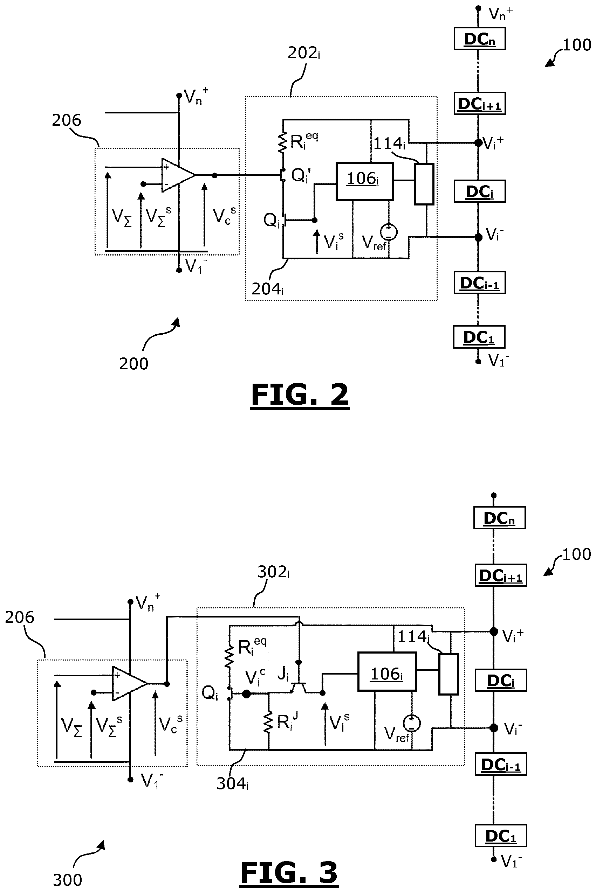

La FIGURE 2 est une représentation du schéma de principe d'un premier exemple de réalisation non limitatif d'un système d'équilibrage selon l'invention.

Le système d'équilibrage 200, de la FIGURE 2, comprend pour chaque dispositif de stockage $DC_1$, ..., $DC_n$, un dispositif d'équilibrage à résistance commandée identique car les dispositifs de stockage $DC_1$, ..., $DC_n$ sont identiques.

Pour ne pas alourdir le schéma, seul le dispositif d'équilibrage $202_i$, associé au dispositif de stockage $DC_i$, est représenté sur la FIGURE 2.

Le dispositif d'équilibrage $202_i$ comprend un circuit de dérivation $204_i$ du dispositif de stockage $DC_i$ comprenant la résistance d'équilibrage $R_i^{eq}$ en série avec le commutateur $Q_i$. Le circuit de dérivation $204_i$ comprend en plus un deuxième commutateur $Q_i'$, en série avec le premier commutateur $Q_i$.

De la même manière que dans le dispositif d'équilibrage $112_i$ de la FIGURE 1b, le premier commutateur $Q_i$ est commandé par la tension $V_i^s$ fournie par le comparateur $106_i$, avec utilisation d'un diviseur de tension $114_i$.

Le système 200 comprend en outre un deuxième comparateur 206, fournissant une tension de commande, notée $V_c^s$, du deuxième commutateur $Q_i'$ et qui permet de commander l'état (fermé ou ouvert) dudit deuxième commutateur $Q_i'$. Ce deuxième comparateur 206 est commun à tous les dispositifs d'équilibrage 202 de tous les dispositifs de stockage $DC_1$, ..., $DC_n$.

La tension de commande $V_c^s$, fournie par le deuxième comparateur 206, est fonction :

- d'une tension de décommutation, notée $V_\Sigma$, qui est une tension de seuil atteinte lorsque tous les circuits de dérivation $204_i$ de tous les dispositifs de stockage $DC_i$ sont dans un état commuté, c'est-à-dire dans un état fermé ; et
- d'une tension, notée $V_\Sigma^s$, obtenue en fonction des tensions $V_1$, ..., $V_n$, aux bornes de tous les dispositifs de stockage $DC_1$, ..., $DC_n$.

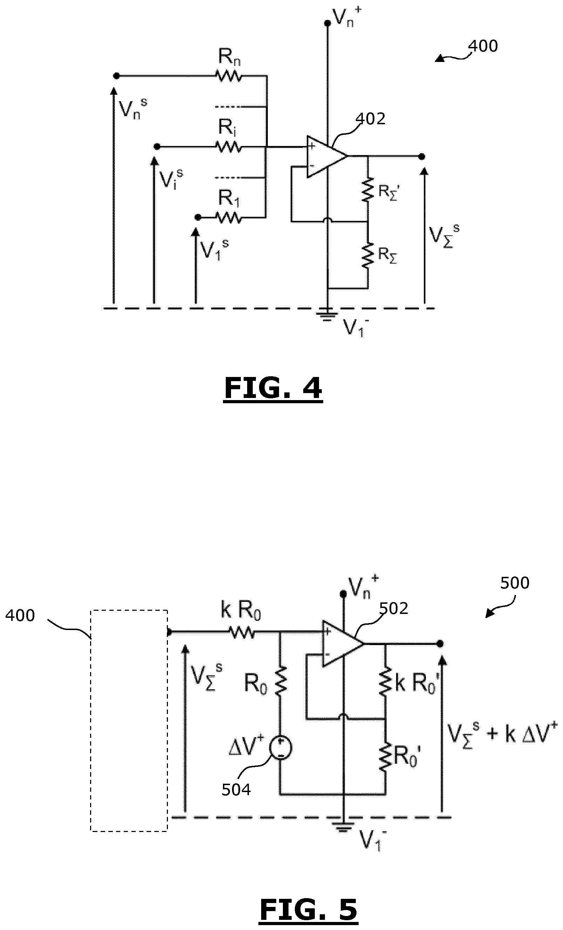

En particulier, de manière nullement limitative, la tension $V_\Sigma^s$ est fonction d'une somme pondérée des tensions $V_1$, ..., $V_n$, aux bornes de tous les dispositifs de stockage $DC_1$, ..., $DC_n$, tel qu'il sera décrit plus en détail dans la suite de la demande, en référence à la FIGURE 4.

Dans l'exemple représenté, le deuxième comparateur 206 est un comparateur inverseur, référencé aux potentiels aux bornes de l'ensemble de stockage 100, c'est-à-dire aux potentiels $V_n^+$ et $V_1^-$, de sorte que :

- $V_c^s = V_n^+$ tant que $V_\Sigma^s < V_\Sigma$, c'est-à-dire tant que tous les circuits de dérivation ne sont pas commutés dans un état fermé, et
- $V_c^s = V_1^-$ si $V_\Sigma^s \geq V_\Sigma$, c'est-à-dire lorsque tous les circuits de dérivation sont commutés dans un état fermé.

Dans l'exemple représenté sur la FIGURE 2, le commutateur $Q_i'$ peut être un transistor MOSFET à canal N dont la grille reçoit la tension $V_c{}^s$ :

- lorsque $V_c{}^s$ vaut $V_n{}^+$ (c'est-à-dire lorsque $V_\Sigma{}^s < V_\Sigma$) alors la tension Grille-Source est positive, et le MOSFET $Q_i{}'$ est passant/fermé et laisse passer le courant ; et
- lorsque $V_c{}^s$ vaut $V_1{}^-$ (c'est dire lorsque $V_\Sigma{}^s \geq V_\Sigma$) alors la tension Grille-Source est négative ou nulle, et le MOSFET $Q_i{}'$ est bloqué/ouvert : le circuit de dérivation $204_i$ est ouvert et ne conduit pas de courant.

Le deuxième comparateur 206 est commun à tous les dispositifs de stockage $DC_1$, ..., $DC_n$. Autrement dit, la tension de commande $V_c{}^s$ fournit par le deuxième comparateur 206 est utilisée pour commander le circuit de dérivation de tous les dispositifs de stockage $DC_1$, ..., $DC_n$.

La FIGURE 3 est une représentation du schéma de principe d'un deuxième exemple de réalisation non limitatif d'un système d'équilibrage selon l'invention.

Le système d'équilibrage 300, de la FIGURE 3, comprend le deuxième comparateur 206 du système 200 de la FIGURE 2.

Le système d'équilibrage 300 comprend en outre pour chaque dispositif de stockage $DC_1$, ..., $DC_n$, un dispositif d'équilibrage à résistance commandée identique car tous les dispositifs de stockage $DC_1$, ..., $DC_n$ sont identiques.

Pour ne pas alourdir le schéma, seul le dispositif d'équilibrage $302_i$, associé au dispositif de stockage $DC_i$, est représenté sur la FIGURE 3.

Le dispositif d'équilibrage $302_i$ comprend un circuit de dérivation $304_i$ du dispositif de stockage $DC_i$ comprenant la résistance d'équilibrage $R_i{}^{eq}$ en série avec un unique commutateur, à savoir le commutateur $Q_i$. Dans le système 300, le commutateur $Q_i$ est commandé en fonction à la fois de la tension $V_i{}^s$ fournie par le premier comparateur $106_i$ et de la tension $V_c{}^s$ fournie par le deuxième comparateur 206.

Pour ce faire, le dispositif d'équilibrage $302_i$ comprend un moyen de commande recevant d'une part la tension $V_i{}^s$ fournie par le premier comparateur $106_i$ et d'autre part la tension $V_c{}^s$ fournie par le deuxième comparateur 206. En particulier, le moyen de commande est un transistor de commande ouvert par défaut, notée $J_i$, tel qu'un transistor bipolaire de type NPN, et monté de sorte que :

- la base du transistor $J_i$ reçoit la tension $V_c{}^s$,
- le collecteur du transistor $J_i$ reçoit la tension $V_i{}^s$, et
- l'émetteur du transistor $J_i$ commande le commutateur $Q_i$, par une tension de commande notée $V_i{}^c$.

Tel que décrit plus haut, le commutateur $Q_i$ peut être un transistor MOSFET à canal N.

Dans ces conditions, le commutateur $Q_i$ du circuit de dérivation $304_i$ est commandé de la manière suivante :

- si la tension aux bornes du dispositif de stockage $DC_i$ n'a pas atteint la tension d'équilibrage $V_{eq}$, alors $V_i{}^s = V_i{}^-$ et $V_c{}^s = V_n{}^+$. Par conséquent, le transistor bipolaire $J_i$ est passant et la tension $V_i{}^-$ arrive au commutateur $Q_i$ qui est alors bloqué/ouvert : le circuit de dérivation $304_i$ ne laisse pas passer le courant ;
- si la tension aux bornes du dispositif de stockage $DC_i$ a atteint la tension d'équilibrage $V_{eq}$, mais que tous les circuits de dérivation de tous les dispositifs de stockage ne sont pas fermés/commutés, alors $V_i{}^s = V_i{}^+$ et $V_c{}^s = V_n{}^+$. Par conséquent, le transistor bipolaire $J_i$ est passant et la tension $V_i{}^+$ arrive au commutateur $Q_i$ qui est alors passant/fermé : le circuit de dérivation $304_i$ laisse passer le courant ; et
- si la tension aux bornes du dispositif de stockage $DC_i$ a atteint la tension d'équilibrage, et que tous les circuits de dérivation de tous les dispositifs de stockage sont fermés/commutés, alors $V_i{}^s = V_i{}^+$ et $V_c{}^s = V_1{}^-$. Par conséquent, le transistor bipolaire $J_i$ est bloqué et la tension $V_i{}^-$ arrive au commutateur $Q_i$ par l'intermédiaire d'une résistance $R_i{}^j$ reliant la grille du commutateur $Q_i$ au potentiel $V_i{}^-$. Le commutateur $Q_i$ est alors bloqué/ouvert : le circuit de dérivation $304_i$ est ouvert et ne laisse pas passer le courant.

Dans les exemples décrits sur les FIGURES 2 et 3, la tension $V_i$ est fournie au comparateur $106_i$ de la même manière que dans le dispositif d'équilibrage $112_i$ de la FIGURE 1b, avec utilisation du diviseur de tension $114_i$. Alternativement, la tension $V_i$ peut être fournie au comparateur $106_i$ de la même manière que dans le dispositif d'équilibrage $102_i$ de la FIGURE 1a, sans utilisation du diviseur de tension.

De plus, dans les exemples décrits, le deuxième comparateur 206, commun à tous les circuits de dérivation, est un comparateur inverseur. Alternativement, le deuxième comparateur 206 peut ne pas être inverseur. Dans ce cas, il peut être référencé aux potentiels $V_1{}^-$ et $V_n{}^+$. Dans ces conditions, le deuxième comparateur 206 renvoie une tension $V_c{}^s = V_1{}^-$ si $V_\Sigma{}^s < V_\Sigma$ et $V_n{}^+$ sinon.

Dans ce cas, dans le système 200 de la FIGURE 2, le commutateur $Q_i{}'$ doit être un commutateur fermé par défaut tel que par exemple un transistor MOSFET à canal P.

Dans le système 300 de la FIGURE 3, le moyen de commande $J_i$ du commutateur $Q_i$ doit alternativement être

un transistor de commande fermé par défaut, tel qu'un transistor bipolaire de type PNP.

La FIGURE 4 est une représentation du schéma de principe d'un exemple non limitatif d'un module fournissant la tension $V_\Sigma^s$, relative à l'état commuté ou non de tous les circuits de dérivation de tous les dispositifs de stockage, pouvant être utilisé dans le système selon l'invention, et en particulier dans les systèmes 200 et 300 des FIGURES 2 et 3.

En particulier, la FIGURE 4 est une représentation du schéma électrique d'un module 400 fournissant la tension $V_\Sigma^s$ à partir des tensions $V_1^s$, ..., $V_n^s$, fournies par les premiers comparateurs $106_i$ des dispositifs d'équilibrage $202_i$, respectivement $302_i$, de tous les dispositifs de stockage $DC_i$, i = 1, ..., n.

On rappelle que chaque tension $V_i^s$ est fonction de la tension $V_i$ aux bornes du dispositif de stockage $DC_i$ tel que décrit en référence aux FIGURES 1a et 1b, de sorte que :

- $V_i^s = V_i^-$ avant commutation du circuit de dérivation du dispositif de stockage $DC_i$, c'est-à-dire lorsque le circuit de dérivation du dispositif de stockage $DC_i$ est à l'état ouvert ; et
- $V_i^s = V_i^+$ après commutation du circuit de dérivation du dispositif de stockage $DC_i$, c'est-à-dire lorsque le circuit de dérivation du dispositif de stockage $DC_i$ est à l'état fermé.

Le module 400 consiste en un sommateur pondéré comprenant un amplificateur opérationnel 402, référencé aux potentiels $V_1^-$ et $V_n^+$ aux bornes de l'ensemble de stockage 100. Deux résistances de rétroaction $R_\Sigma$ et $R_\Sigma'$ sont reliées à la sortie de l'amplificateur opérationnel 402. Tel que représenté sur la FIGURE 4, l'amplificateur opérationnel 402 est agencé pour recevoir, à son entrée positive, toutes les tensions $V_i^s$ fournies par tous les premiers comparateurs $106_i$, par le biais de résistances $R_i$ avec i = 1, ..., n. En sortie, le sommateur pondéré 402 fournit la tension $V_\Sigma^s$, correspondant à la somme pondérée de toutes les tensions $V_i^s$, selon la relation suivante :

$$V_\Sigma^s = \frac{R_\Sigma + R_\Sigma'}{R_\Sigma} \times \frac{\displaystyle\sum_{i=1}^{n} \frac{V_i^s}{R_i}}{\displaystyle\sum_{i=1}^{n} \frac{1}{R_i}}$$

Les résistances $R_\Sigma$ et $R_\Sigma'$ et les résistances $R_i$, sont choisies de sorte que la valeur maximale de la tension $V_\Sigma^s$ est limitée à la différence de potentiel aux bornes de l'ensemble de stockage 100, à savoir $(V_n^+ - V_1^-)$.

Ainsi, en posant :

$$k = \frac{R_\Sigma + R_\Sigma'}{R_\Sigma}$$

on obtient, lorsque tous les dispositifs de stockage $DC_1$, ..., $DC_n$ sont identiques et ont la même tension d'équilibrage $V_{eq}$ :

$$\frac{\frac{1}{R_i}}{\displaystyle\sum_{i=1}^{n} \frac{1}{R_i}} = \frac{1}{i\,k} \text{ avec } i = 1, ..., n.$$

Ces relations permettent de définir la valeur des résistances utilisées dans le module 400, ainsi que la valeur de k. En partant des relations plus haut, on obtient, par calcul :

$$k = \sum_{i=1}^{n} \frac{1}{i}$$

$$R_i = i \times R_{ref},$$

et

$$R_\Sigma' = (k - 1) R_\Sigma$$

où $R_{ref}$ est une résistance arbitraire, mais suffisamment élevée pour limiter le courant d'entrée de l'amplificateur opérationnel 402. Par exemple, $R_{ref}$ peut être choisie telle que $R_{ref} > 10$ kΩ. De plus, $R_\Sigma$ apparaît comme une résistance arbitraire. Là aussi, $R_\Sigma$ est choisie suffisamment élevée pour limiter le courant de sortie de l'amplificateur opérationnel. Par exemple, $R_\Sigma$ peut être choisie telle que $R_\Sigma > 10$ kΩ.

Le tableau ci-dessous donne quelques valeurs de k pour des valeurs de n.

| n | 2 | 4 | 6 | 8 | 10 | 12 | 20 | 24 |
|---|---|---|---|---|----|----|----|----|
| k | 1.5 | 2.083 | 2.45 | 2.718 | 2.929 | 3.103 | 3.598 | 3.776 |

La FIGURE 5 est une représentation du schéma de principe d'un exemple de module de compensation pour prendre en compte un décalage pouvant se produire au niveau des tensions fournies par les premiers comparateurs du système selon l'invention, et pouvant être mis en œuvre dans le système selon l'invention, et en particulier dans les systèmes 200 et 300 des FIGURES 2 et 3.

En effet, pour des raisons pratiques de réalisation ou économiques, le signal $V_i^s$ renvoyé par les premiers comparateurs $106_i$ n'est pas forcément égal à $V_i^-$ ou $V_i^+$. Il peut exister un décalage, ou offset, positif dans le cas du niveau bas, négatif dans le cas du niveau haut. On a donc :

- $V_i^s = V_i^- + \Delta V_i^-$ si $V_i^+ - V_i^- < V_{eq}$, $\Delta V_i^- > 0$
- $V_i^s = V_i^+ - \Delta V_i^+$ si $V_i^+ - V_i^- \geq V_{eq}$, $\Delta V_i^+ > 0$

Pour prendre en compte cet offset, il est possible d'ajouter, en sortie du sommateur pondéré 400, un décalage de compensation $+k\Delta V^+$.

Cet ajout peut être réalisé par un module de compensation 500 tel que représenté sur la FIGURE 5 disposé en sortie du, et en cascade avec le, sommateur pondéré 400 de la FIGURE 4.

Le module 500 comprend un sommateur réalisé par un amplificateur opérationnel 502, référencé aux potentiels $V_1^-$ et $V_n^+$ aux bornes de l'ensemble de stockage 100.

Le sommateur 502 reçoit en son entrée positive :

- la tension $V_\Sigma^s$ fournie par le sommateur pondéré, au travers d'une résistance $kR_0$ (k étant la valeur définie plus haut), et
- la tension $\Delta V^+$ fournie par une source de tension 504, au travers d'une résistance $R_0$ ;

et fournit en sortie la somme $(V_\Sigma^s + k\Delta V^+)$.

Deux résistances de bouclage $kR_0'$, respectivement $R_0'$, sont utilisées en sortie de l'amplificateur opérationnel 502, pour relier la sortie de l'amplificateur opérationnel 502 à son entrée négative, respectivement à la source de tension 504. Les résistances $R_0$ et $R_0'$ sont des résistances arbitraires de valeur suffisamment grande, par exemple d'une valeur supérieure à 10 kΩ chacune, pour limiter les courants en entrée et en sortie de l'amplificateur opérationnel 502.

Dans le cas où le système selon l'invention met en œuvre un tel module de compensation 500, le deuxième comparateur 206 réalise une comparaison de la tension $V_\Sigma$ à la tension $(V_\Sigma^s + k\Delta V^+)$, et non pas à la tension $V_\Sigma^s$.

Alternativement, la compensation de décalage peut être réalisée en entrée du sommateur pondéré, tel que le sommateur 400 de la FIGURE 4, en ajoutant une $(n+1)^{ième}$ branche parallèle en entrée du sommateur 400, cette $(n+1)^{ième}$ branche amenant une tension de décalage, sommée avec les autres tensions, telle que $V_\Sigma^s = V_n^+$.

Suivant encore une autre alternative, la compensation de décalage peut être réalisée en tenant compte dudit décalage dans la tension de décommutation $V_\Sigma$.

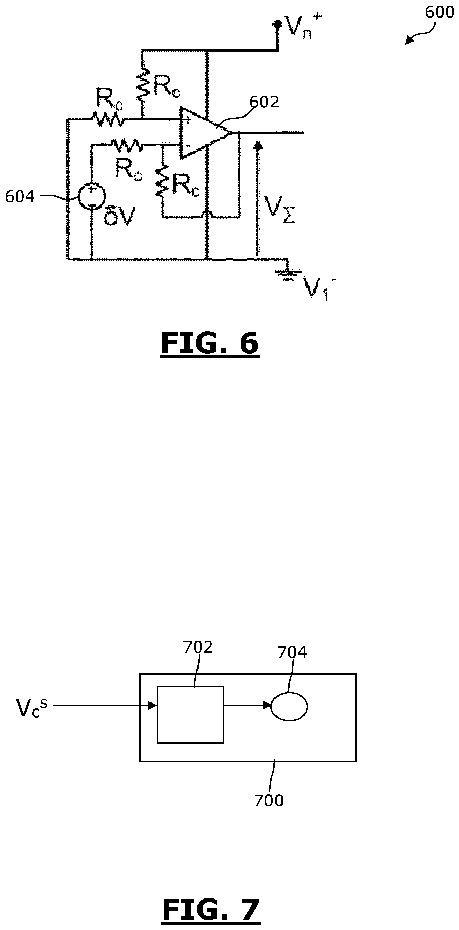

La FIGURE 6 est une représentation du schéma de principe d'un exemple non limitatif de module fournissant la tension de décommutation, $V_\Sigma$, et pouvant être mis en œuvre dans le système selon l'invention, et en particulier dans les systèmes 200 et 300 des FIGURES 2 et 3.

Le module 600, représenté sur la FIGURE 6, comprend :

- un soustracteur de tension comprenant un amplificateur opérationnel 602, référencé aux potentiels $V_1^-$ et $V_n^+$ (aux bornes de l'ensemble de stockage 100) ; et
- une source de tension 604 fournissant une tension 5V référencée au potentiel $V_1^-$.

L'amplificateur opérationnel 602 reçoit, en son entrée positive, la tension $V_n^+$, et en son entrée négative, la tension 5V. En sortie, l'amplificateur opérationnel 602, et donc le module 600, fournit une tension $V_\Sigma$ correspondant à la différence :

$$V_\Sigma = V_n^+ - \delta V.$$

La tension 5V peut être choisie telle que $\delta V = \dfrac{V_{eq}}{2\,n'}$ avec $V_{eq}$ la tension d'équilibrage. Ainsi, la tension de décommutation $V_\Sigma$ vérifie la relation :

$$V_\Sigma = V_n^+ - \dfrac{V_{eq}}{2\,n}$$

Sachant que, dans la plupart des applications, les dispositifs de stockage $DC_1$, ..., $DC_n$ sont identiques, ne comprennent, chacun, qu'un seul supercondensateur, et ont la même tension d'équilibrage $V_{eq}$ vérifiant $2\,V \leq V_{eq} \leq 3$ V, et que la précision 5V attendue de l'électronique analogique est supérieure ou égale à 50 mV, la valeur de n peut être choisie de sorte que $8 \leq n \leq 14$, et préférentiellement $10 \leq n \leq 12$.

La FIGURE 7 est une représentation schématique d'un exemple de réalisation d'un dispositif de surveillance pouvant être mis en œuvre dans le système selon l'invention, et en particulier dans les systèmes 200 et 300 des FIGURES 2 et 3.

Le dispositif de surveillance 700, représenté sur la FIGURE 7, prend en entrée le signal $V_c^s$ fourni par le deuxième comparateur 206 et surveille la valeur de la tension $V_c^s$.

Pour rappel la tension $V_c^s = V_n^+$ lorsque tous les circuits de dérivation de tous les dispositifs de stockage $DC_i$ ont commuté, c'est-à-dire qu'ils sont dans un état fermé laissant passer le courant. Cette valeur $V_n^+$ définit un état haut de la tension $V_c^s$ (tension non-nulle par rapport à $V_1^-$). Dans le cas contraire, la tension $V_c^s = V_1^-$ lorsqu'il existe au moins un dispositif de stockage $DC_i$ dont le circuit de dérivation n'a pas commuté et se trouve dans un état ouvert ne laissant pas passer le courant. Cette valeur $V_1^-$ définit un état bas de la tension $V_c^s$ (tension nulle par rapport à $V_1^-$).

Le dispositif de surveillance 700 est configuré pour surveiller la valeur de la tension $V_c^s$ en vue de déterminer si la tension $V_c^s$ passe régulièrement à l'état haut, défini par la valeur $V_n^+$, puis à l'état bas, défini par la tension $V_1^-$.

Si c'est le cas, cela veut dire que le système d'équilibrage fonctionne correctement.

Dans le cas contraire cela signale un mauvais fonctionnement du système d'équilibrage. Le dysfonctionnement peut être lié :

- à la partie électronique qui commande la commutation de $V_e^s$ qui ne fonctionne pas : cela regroupe la connectique qui amène les potentiels $V_i^+$ et $V_i^-$ des dispositifs de stockage aux comparateurs, l'électronique qui génère les tensions $V_i^s$, et celle qui génère $V_e^s$ ;
- à la partie électronique qui réalise l'équilibrage qui ne fonctionne pas : cela regroupe la connectique qui relie les résistances d'équilibrage aux dispositifs de stockage, les résistances d'équilibrage elles-mêmes, l'électronique de commutation des circuits d'équilibrage (les commutateurs $Q_i$ et $Q_i'$ typiquement) et celle de commande desdits commutateurs (les commutateurs $J_i$ typiquement);
- au système d'équilibrage qui n'arrive pas à équilibrer : cela regroupe le cas d'un disfonctionnement majeur au sein des dispositifs de stockage ou des résistances d'équilibrage : un cas typique serait des résistances d'équilibrage de valeurs différentes, c'est-à-dire des courants d'équilibrage différents, au sein d'un même ensemble de circuits d'équilibrage.

Le dispositif 700 peut comprendre un comparateur 702 comparant la tension $V_c^s$ à la tension $V_n^+$ (respectivement $V_1^-$) et commandant, par exemple, un voyant lumineux 704 en fonction de ladite comparaison. Ainsi, si le voyant lumineux 704 émet un signal qui s'allume et s'éteint, le fonctionnement du système est correct. Au contraire, si le voyant lumineux 704 émet un signal qui reste fixe (allumé ou éteint), cela veut dire que le système ne fonctionne pas correctement.

Bien entendu, tout autre moyen de transmission d'un changement de tension peut être utilisé à la place du voyant lumineux.

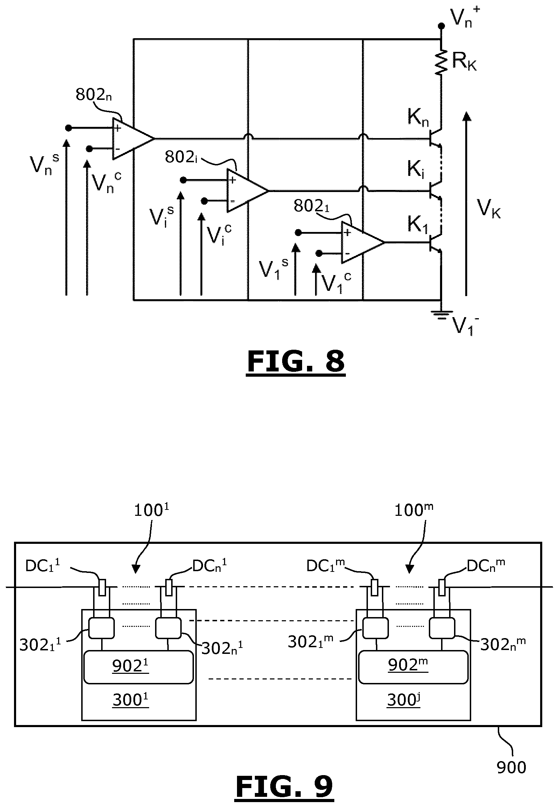

La FIGURE 8 est une représentation schématique d'un autre exemple de réalisation d'un module de surveillance pouvant être mis en œuvre dans le système selon l'invention, et en particulier dans le système 300 de la FIGURE 3.

Le module de surveillance 800 comprend pour chaque dispositif de stockage $DC_i$ un comparateur $802_i$, référencé aux potentiels $V_n^+$ et $V_1^-$ aux bornes de l'ensemble de stockage 100, et recevant :

- à son entrée positive la tension $V_i^s$ fournie par le premier comparateur $106_i$ associé audit dispositif de stockage $DC_i$, et
- à son entrée négative la tension $V_i^c$ fournie par le moyen de commande $J_i$ associé audit dispositif de stockage $DC_i$.

Chaque comparateur $802_i$ compare donc les tensions $V_i^s$ et $V_i^c$ de sorte que si $V_i^s \leq V_i^c$ la tension de sortie du comparateur vaut $V_1^-$, et si $V_i^s > V_i^c$ la tension de sortie du comparateur vaut $V_n^+$.

Chaque comparateur $802_i$ commande un commutateur, noté $K_i$, qui peut être par exemple un transistor bipolaire de type NPN, et qui est ouvert par défaut et qui est fermé lorsque la tension fournie par le comparateur est égale à $V_n^+$.

Les commutateurs $K_1$, ..., $K_n$, commandés respectivement par les comparateurs $802_1$, ..., $802_n$, sont reliés en série entre eux et avec une résistance $R_K$, entre les potentiels $V_n^+$ et $V_1^-$.

Ainsi, lorsqu'il existe au moins un commutateur $K_i$ qui est ouvert alors aucun courant ne passe dans la résistance $R_K$ et la tension $V_K$ à la borne négative de la résistance $R_K$ vaut $V_n^+$, ce qui correspond à un état haut (tension non-nulle par rapport à $V_1^-$). Lorsque tous les commutateurs $K_i$ sont fermés alors un courant passe par la résistance $R_K$ et la tension $V_K$ à la borne négative de la résistance $R_K$ bornes vaut $V_1^-$, ce qui correspond à un état bas (tension nulle par rapport à $V_1^-$).

La résistance $R_k$ est une résistance arbitraire de valeur suffisamment grande, par exemple d'une valeur supérieure à 10 kΩ, pour limiter le courant qui traverse l'ensemble des commutateurs $K_1$, ..., $K_n$.

Cette tension $V_K$ peut être utilisée pour surveiller le fonctionnement du système d'équilibrage, par exemple en allumant un voyant lumineux (non représenté sur la FIGURE 8).

Alternativement, chaque comparateur $802_i$ peut être local au dispositif d'équilibrage $302_i$ de chaque dispositif de stockage $DC_i$.

La FIGURE 9 est une représentation schématique d'un exemple de réalisation non limitatif d'un module de stockage selon l'invention.

Le module de stockage 900, représenté sur la FIGURE 9, comprend plusieurs ensembles de stockage $100^1$, ..., $100^m$ comprenant, chacun, plusieurs dispositifs de stockage reliés entre eux en série.

Les ensembles $100^1$, ..., $100^m$ peuvent être reliés entre eux en série ou en parallèle.

A chaque ensemble $100^j$ est associé un système d'équilibrage $300^j$, tel que par exemple le système 300 de la FIGURE 3.

A chaque dispositif de stockage $DC^j$, $1 \leq i \leq n$ et $1 \leq j \leq m$, est relié un dispositif d'équilibrage $302^j$, tel que par exemple le dispositif d'équilibrage $302_i$ de la FIGURE 3.

A chaque ensemble $100^j$ est associé un module de gestion $902^j$ comprenant :

- un deuxième comparateur, tel que par exemple le deuxième comparateur 206 de la FIGURE 3 ;
- un sommateur pondéré, tel que par exemple le sommateur pondéré 400 de la FIGURE 4 ;
- un module fournissant la tension de décommutation, tel que par exemple le module 600 de la FIGURE 6 ;
- éventuellement un module de compensation de décalage, tel que par exemple le module 500 de la FIGURE 5 ; et
- éventuellement, un module de surveillance, tel que par exemple le module de surveillance 700 de la FIGURE 7, ou le module de surveillance 800 de la FIGURE 8.

Le module de stockage 900 peut être utilisé dans un véhicule de transport électrique ou hybride, rechargeable qui peut être un bus, une voiture, un tram-bus, un bateau, un camion, un téléphérique, un monte-charge, une grue, etc.

Le module de stockage 900 peut aussi être utilisé dans une installation électrique qui peut être :

- une station de charge électrique pour véhicules électriques ou hybrides,
- une station d'alimentation électrique d'un bâtiment, d'un complexe ou d'un appareil électrique/électronique de communication, ou
- une station de régulation, de lissage, ou de stockage tampon d'énergie électrique.

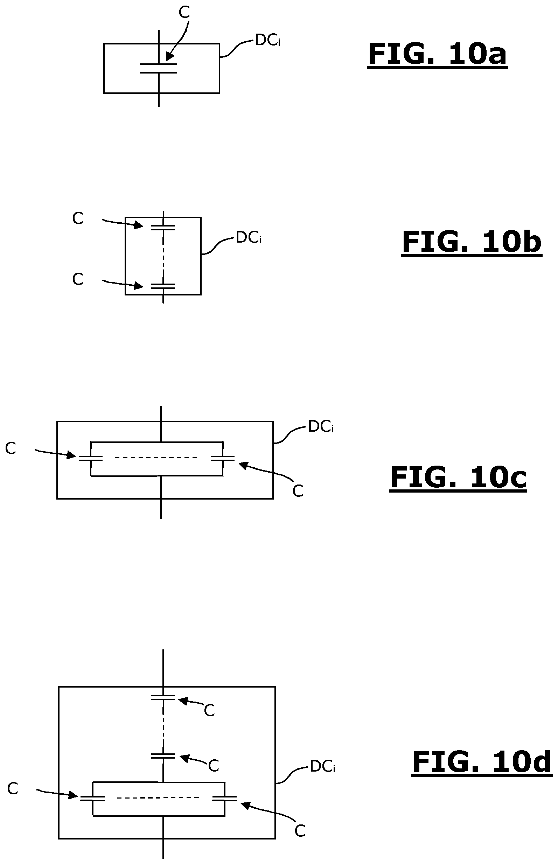

Les FIGURES 10a-10d sont des exemples de réalisation non limitatifs d'un dispositif de stockage d'énergie électrique par effet capacitif.

Chaque dispositif de stockage $DC_i$ peut être l'un quelconque des dispositifs de stockage décrits en référence aux FIGURES 10a-10d.

Le dispositif de stockage $DC_i$ représenté sur la FIGURE 10a comprend un unique supercondensateur C. C'est cet exemple de dispositif qui a été considéré dans les exemples décrits plus haut en référence aux FIGURES 1-9.

Bien entendu, l'invention n'est pas limitée à cet exemple.

Par exemple, le dispositif de stockage $DC_i$ représenté sur la FIGURE 10b comprend une pluralité de supercondensateurs C montés en série.

Le dispositif de stockage $DC_i$ représenté sur la FIGURE 10c comprend une pluralité de supercondensateurs C montés en parallèle.

Le dispositif de stockage $DC_i$ représenté sur la FIGURE 10d comprend un groupe d'un ou plusieurs supercondensateurs C montés en série avec un groupe d'au moins deux supercondensateurs montés en parallèle entre eux.

Bien entendu, l'invention n'est pas limitée aux exemples détaillés ci-dessus.

## Revendications

1.  Système (200 ; 300) d'équilibrage analogique d'un ensemble (100) de stockage d'énergie électrique rechargeable comprenant une pluralité de dispositifs de stockage par effet capacitif ($DC_1$, ..., $DC_n$) reliés entre eux en série, ledit système (200 ; 300) comprenant un dispositif d'équilibrage ($202_i$ ; $302_i$) pour chaque dispositif de stockage ($DC_i$) comportant :

    - un circuit de dérivation ($204_i$ ; $304_i$) dudit dispositif de stockage ($DC_i$), commandable entre un état fermé et un état ouvert, et
    - un comparateur de tension ($106_i$), dit premier comparateur, agencé pour commander ledit circuit de dérivation ($204_i$ ; $304_i$), dans un état ouvert ou fermé, en fonction de la tension aux bornes dudit dispositif de stockage ($DC_i$) et d'une tension prédéterminée, dite tension d'équilibrage ($V_{eq}$) ;

    ledit système (200 ; 300) comprenant en outre au moins un autre comparateur de tension (206), dit deuxième comparateur, agencé pour commander un état ouvert, ou fermé, du circuit de dérivation ($204_i$ ; $304_i$) de chaque dispositif de stockage ($DC_i$),
    ledit système (200; 300) étant **caractérisé en ce que** ledit deuxième comparateur et agencé pour commander l'état ouvert, ou fermé, du circuit de dérivation [R1, Q1, R2, Q2] de chaque dispositif de stockage en fonction :

    - d'une tension ($V_\Sigma$), dite tension de décommutation, représentative d'un état fermé de tous les circuits de dérivation ($204_i$ ; $304_i$) de tous les dispositifs de stockage ($DC_i$) dudit ensemble (100), et
    - de la tension aux bornes de chaque dispositif de stockage ($DC_i$) dudit ensemble (100), ou de la tension aux bornes dudit ensemble (100).

2.  Système (200 ; 300) selon la revendication précédente, **caractérisé en ce que** le deuxième comparateur (206) est référencé aux potentiels aux bornes de l'ensemble de stockage (100), et est configuré pour fournir en sortie :

    - dans un premier état : le plus petit potentiel ($V_1^-$) aux bornes de l'ensemble de stockage (100) ; et
    - dans un deuxième état : le plus grand potentiel ($V_n^+$) aux bornes de l'ensemble de stockage (100).

3.  Système (200 ; 300) selon l'une quelconque des revendications précédentes, **caractérisé en ce qu'**il comprend un sommateur pondéré (400), recevant la tension ($V_i^s$) fournie par chacun des premiers comparateurs ($106_i$), et fournissant une tension ($V_\Sigma^S$) correspondant à une somme pondérée desdites tensions ($V_i^s$), ladite tension de somme pondérée étant utilisée par le deuxième comparateur (206) pour commander tous les circuits de dérivation ($204_i$ ; $304_i$).

4.  Système (200 ; 300) selon la revendication précédente, **caractérisé en ce que** le sommateur pondéré (400) est référencé aux potentiels ($V_1^-$, $V_n^+$) aux bornes de l'ensemble de stockage (100), et fournit une tension de somme pondérée ($V_\Sigma^S$) inférieure ou égale à la différence entre lesdits potentiels ($V_n^+$-$V_1^-$).

5.  Système (200 ; 300) selon l'une quelconque des revendications 3 ou 4, **caractérisé en ce qu'**il comprend en outre :

- une branche additionnelle en entrée du sommateur pondéré, ou
- un deuxième sommateur (500), en sortie du sommateur pondéré(400) ;

introduisant une tension ($k\Delta V^+$), dite de compensation, correspondant à un décalage de tension introduit au niveau d'au moins un des, en particulier de tous les, premiers comparateurs ($106_i$).

6. Système (200 ; 300) selon l'une quelconque des revendications précédentes, **caractérisé en ce qu'**il comprend un moyen (600) fournissant la tension de décommutation ($V_\Sigma$) en fonction de la tension aux bornes de l'ensemble de stockage (100), et éventuellement d'une tension (5V) représentant une marge de sécurité.

7. Système (200 ; 300) selon la revendication précédente, **caractérisé en ce que** le moyen fournissant la tension de décommutation ($V_\Sigma$) comprend un soustracteur (600), référencé aux potentiels ($V_1^-$, $V_n^+$) aux bornes de l'ensemble de stockage (100), fournissant la tension de décommutation ($V_\Sigma$) en fonction de la tension aux bornes de l'ensemble de stockage (100) et de la tension (5V) représentant une marge de sécurité.

8. Système (200 ; 300) selon l'une quelconque des revendications précédentes, **caractérisé en ce que**, pour au moins un, en particulier chaque, dispositif de stockage ($DC_i$), le premier comparateur ($106_i$) du dispositif d'équilibrage ($202_i$ ; $302_i$) dudit dispositif de stockage ($DC_i$) est référencé aux potentiels ($V_i^-$, $V_i^+$) aux bornes dudit dispositif de stockage ($DC_i$).

9. Système (200 ; 300) selon l'une quelconque des revendications précédentes, **caractérisé en ce que** l'un au moins des premier et deuxième comparateurs ($106_i$ , 206) est un comparateur à hystérésis.

10. Système (200) selon l'une quelconque des revendications précédentes, **caractérisé en ce qu'**au moins un, en particulier chaque, circuit de dérivation ($204_i$) comprend deux commutateurs ($Q_i$, $Q_i'$), montés en série dans ledit circuit de dérivation ($204_i$), l'un ($Q_i$) commandé en fonction de la tension ($V_i^s$) fournie par le premier comparateur ($106_i$) et l'autre ($Q_i'$) commandé en fonction de la tension ($V_c^s$) fournie par le deuxième comparateur (206).

11. Système (300) selon l'une quelconque des revendications précédentes, **caractérisé en ce qu'**au moins un, en particulier chaque, circuit de dérivation ($304_i$) comprend un unique commutateur ($Q_i$), le dispositif d'équilibrage ($302_i$) comprenant en outre un moyen de commande ($J_i$) dudit unique commutateur ($Q_i$), en fonction des tensions ($V_i^s$, $V_c^s$) fournies par les premier et deuxième comparateurs ($106_i$, 206).

12. Système (300) selon la revendication précédente, **caractérisé en ce que** le moyen de commande ($J_i$) comprend :

    - un transistor bloqué par défaut, par exemple un transistor bipolaire de type NPN, en particulier lorsque le deuxième comparateur (206) est un comparateur inverseur, ou
    - un transistor passant par défaut, par exemple un transistor bipolaire de type PNP, en particulier lorsque le deuxième comparateur (206) est un comparateur non-inverseur.

13. Système (200 ; 300) selon l'une quelconque des revendications précédentes, **caractérisé en ce qu'**il comprend en outre un dispositif (700 ; 800) de surveillance du fonctionnement dudit système (200 ; 300) en fonction de la tension ($V_c^s$) fournie par le deuxième comparateur (206).

14. Système (300) selon l'une quelconque des revendications 11 ou 12, **caractérisé en ce qu'**il comprend un dispositif de surveillance du fonctionnement dudit système (300) en fonction des tensions de commande ($V_i^c$) desdits commutateurs uniques ($Q_i$) de tous les circuits de dérivation ($304_i$).

15. Système (300) selon l'une quelconque des revendications 11 ou 12, **caractérisé en ce qu'**il comprend un dispositif de surveillance (800) du fonctionnement dudit système (300) en fonction :

    - de la tension de commande ($V_i^c$) dudit commutateur unique ($Q_i$), et
    - de la tension ($V_i^s$) fournie par le premier comparateur ($106_i$) ;

de chaque dispositif d'équilibrage ($302_i$).

16. Module de stockage d'énergie électrique rechargeable (900) comprenant :

- au moins un ensemble de stockage d'énergie électrique rechargeable ($100^1$, ..., $100^m$) comprenant, chacun, une pluralité de dispositifs de stockage d'énergie électrique par effet capacitif reliés entre eux en série au sein dudit ensemble ($100^1$, ..., $100^m$), et
- pour au moins un, en particulier chaque, ensemble de stockage, un système d'équilibrage ($300^j$) selon l'une quelconque des revendications précédentes.

17. Véhicule de transport électrique ou hybride comprenant un ou plusieurs module(s) de stockage d'énergie électrique rechargeable(s) (900) selon la revendication précédente.

18. Installation électrique, telle qu'une station de charge électrique pour véhicules de transport électriques ou hybrides, ou une station d'alimentation électrique d'un bâtiment, d'un complexe ou d'un appareil électrique/électronique de communication, ou une station de régulation ou de lissage d'énergie électrique, comprenant un ou plusieurs module(s) de stockage d'énergie électrique rechargeable(s) (900) selon la revendication 16.

**Patentansprüche**

1. System (200; 300) zum analogen Ausgleichen einer aufladbaren Anordnung (100) zur Speicherung von elektrischer Energie, umfassend eine Vielzahl von in Reihe miteinander geschalteten Speichervorrichtungen mit kapazitivem Effekt ($DC_1$, ..., $DC_n$), wobei das System (200; 300) jeweils eine Ausgleichsvorrichtung ($200_i$, $302_i$) für jede Speichervorrichtung ($DC_i$) umfasst, welche beinhaltet:

   - eine Abzweigschaltung ($204_i$; $304_i$) der Speichervorrichtung ($DC_i$), welche zwischen einem geschlossenen und einem geöffneten Zustand steuerbar ist, und
   - einen Spannungskomparator ($106_i$), den sogenannten ersten Komparator, der dazu ausgebildet ist, die Abzweigschaltung ($204_i$; $304_i$) in einen geöffneten oder geschlossenen Zustand in Abhängigkeit von der Spannung an den Polen der Speichervorrichtung ($DC_i$) und von einer vorgegebenen Spannung, der sogenannten Ausgleichsspannung ($V_{eq}$) zu steuern;

   wobei das System (200; 300) außerdem mindestens einen weiteren Spannungskomparator (206), den sogenannten zweiten Komparator, umfasst, welcher dazu ausgebildet ist, einen geöffneten oder geschlossenen Zustand der Abzweigschaltung ($204_i$; $304_i$) jeder Speichervorrichtung ($DC_i$) zu steuern, wobei das System (200; 300) **dadurch gekennzeichnet ist, dass** der zweite Komparator dazu ausgebildet ist, den geöffneten bzw. geschlossenen Zustand der Abzweigschaltung [R1, Q1, R2, Q2] jeder Speichervorrichtung zu steuern, und zwar in Abhängigkeit von:

   - einer Spannung ($V_\Sigma$), der sogenannten Entkommutierungsspannung, welche einen geschlossenen Zustand aller Abzweigschaltungen ($204_i$; $304_i$) aller Speichervorrichtungen ($DC_i$) der Anordnung (100) darstellt, und
   - der Spannung an den Polen jeder Speichervorrichtung ($DC_i$) der Anordnung (100), oder der Spannung an den Polen der Anordnung (100).

2. System (200; 300) nach dem vorhergehenden Anspruch, **dadurch gekennzeichnet, dass** der zweite Komparator (206) auf die Potenziale an den Polen der Speicheranordnung (100) bezogen ist und dazu eingerichtet ist, am Ausgang auszugeben:

   - in einem ersten Zustand: das kleinste Potenzial ($V_1^-$) an den Polen der Speicheranordnung (100); und
   - in einem zweiten Zustand: das größte Potenzial ($V_n^+$) an den Polen der Speicheranordnung (100).

3. System (200; 300) nach einem der vorhergehenden Ansprüche, **dadurch gekennzeichnet, dass** es einen gewichteten Summierer (400) umfasst, welcher die durch jeden der ersten Komparatoren ($106_i$) ausgegebene Spannung ($V_i^S$) empfängt und eine Spannung ($V_\Sigma^S$) abgibt, die einer gewichteten Summe der Spannungen ($V_i^S$) entspricht, wobei die Spannung von gewichteter Summe durch den zweiten Komparator (206) zur Steuerung sämtlicher Abzweigschaltungen ($204_i$; $304_i$) eingesetzt wird.

4. System (200; 300) nach dem vorhergehenden Anspruch, **dadurch gekennzeichnet, dass** der gewichtete Summierer (400) auf die Potenziale ($V_1^-$, $V_n^+$) an den Polen der Speicheranordnung (100) bezogen ist und eine Spannung von gewichteter Summe ($V_\Sigma^S$) kleiner oder gleich der Differenz zwischen den Potenzialen ($V_n^+$-$V_1^-$) abgibt.

5. System (200; 300) nach einem der Ansprüche 3 oder 4, **dadurch gekennzeichnet, dass** es außerdem umfasst:

- einen zusätzlichen Zweig am Eingang des gewichteten Summierers, oder
- einen zweiten Summierer (500) am Ausgang des gewichteten Summierers (400);

welcher eine Spannung ($K\Delta V^+$), die sogenannte Ausgleichsspannung, einführt, wobei diese einer Spannungsverschiebung entspricht, die an mindestens einem, insbesondere an allen ersten Komparatoren ($106_i$) eingeführt wird.

6. System (200; 300) nach einem der vorhergehenden Ansprüche, **dadurch gekennzeichnet, dass** es ein Mittel (600) zur Ausgabe der Entkommutierungsspannung ($V_\Sigma$) in Abhängigkeit von der Spannung an den Polen der Speicheranordnung (100) und eventuell von einer einem Sicherheitsspielraum entsprechenden Spannung ($\delta V$) umfasst.

7. System (200; 300) nach dem vorhergehenden Anspruch, **dadurch gekennzeichnet, dass** das Mittel zur Ausgabe der Entkommutierungsspannung ($V_\Sigma$) einen Subtrahierer (600) umfasst, welcher auf die Potenziale ($V_1^-$, $V_n^+$) an den Polen der Speicheranordnung (100) bezogen ist und die Entkommutierungsspannung ($V_\Sigma$) in Abhängigkeit von der Spannung an den Polen der Speichervorrichtung (100) und der einem Sicherheitsspielraum entsprechenden Spannung ($\delta V$) abgibt.

8. System (200; 300) nach einem der vorhergehenden Ansprüche, **dadurch gekennzeichnet, dass** für wenigstens eine, insbesondere jede Speichervorrichtung ($DC_i$) der erste Komparator ($106_i$) der Ausgleichsvorrichtung ($202_i$; $302_i$) der Speichervorrichtung ($DC_i$) auf die Potenziale ($V_i^-$, $V_i^+$) an den Polen der Speichervorrichtung ($DC_i$) bezogen ist.

9. System (200; 300) nach einem der vorhergehenden Ansprüche, **dadurch gekennzeichnet, dass** der mindestens eine der ersten und zweiten Komparatoren (106, 206) ein Hysteresiskomparator ist.

10. System (200) nach einem der vorhergehenden Ansprüche, **dadurch gekennzeichnet, dass** wenigstens eine, insbesondere jede Abzweigschaltung ($204_i$) zwei in der Abzweigschaltung ($204_i$) in Reihe geschalteten Umschalter ($Q_i$, $Q_i'$) umfasst, wobei der eine ($Q_i$) in Abhängigkeit von der durch den ersten Komparator ($106_i$) abgegebenen Spannung ($V_i^S$) gesteuert wird und der andere ($Q_i'$) in Abhängigkeit von der durch den zweiten Komparator (206) abgegebenen Spannung ($V_\Sigma^S$) gesteuert wird.

11. System (300) nach einem der vorhergehenden Ansprüche, **dadurch gekennzeichnet, dass** wenigstens eine, insbesondere jede Abzweigschaltung ($304_i$) einen einzelnen Umschalter ($Q_i$) umfasst, wobei die Ausgleichsvorrichtung ($302_i$) außerdem ein Steuerungsmittel ($J_i$) des einzelnen Umschalters ($Q_i$) in Abhängigkeit von den durch den ersten und den zweiten Komparator ($106_i$, 206) abgegebenen Spannungen ($V_i^S$, $V_c^S$) umfasst.

12. System (300) nach dem vorhergehenden Anspruch, **dadurch gekennzeichnet, dass** das Steuerungsmittel ($J_i$) umfasst:

   - einen standardmäßig blockierten Transistor, zum Beispiel einen bipolaren NPN-Transistor, insbesondere wenn der zweite Komparator (206) ein Inverter-Komparator ist, oder
   - einen standardmäßig leitenden Transistor, zum Beispiel einen bipolaren NPN-Transistor, insbesondere wenn der zweite Komparator (206) ein Nicht-Inverter-Komparator ist.

13. System (200; 300) nach einem der vorhergehenden Ansprüche, **dadurch gekennzeichnet, dass** es außerdem eine Vorrichtung (700; 800) zur Überwachung des Betriebs des Systems (200; 300) in Abhängigkeit von der durch den zweiten Komparator (206) abgegebenen Spannung ($V_c^s$) umfasst.

14. System (300) nach einem der Ansprüche 11 oder 12, **dadurch gekennzeichnet, dass** es eine Vorrichtung zur Überwachung des Betriebs des Systems (300) in Abhängigkeit von den Steuerspannungen ($V_i^C$) der einzelnen Umschalter ($Q_i$) sämtlicher Abzweigschaltungen ($304_i$).

15. System (300) nach einem der Ansprüche 11 bis 12, **dadurch gekennzeichnet, dass** es eine Überwachungsvorrichtung (800) des Betriebs des Systems (300) umfasst in Abhängigkeit von:

   - der Steuerspannung ($V_i^c$) des einzelnen Umschalters ($Q_i$), und
   - der durch den ersten Komparator ($106_i$) abgegebenen Spannung ($Vi^s$) ;

für jede Ausgleichsvorrichtung ($302_i$).

16. Wiederaufladbares Modul zur Speicherung von elektrischer Energie (900), umfassend:

- mindestens eine wiederaufladbare Anordnung zur Speicherung von elektrischer Energie ($100^1$, ..., $100^m$), wobei sie jeweils eine Vielzahl von Vorrichtungen zur Speicherung von elektrischer Energie mit kapazitivem Effekt, welche innerhalb der Anordnung ($100^1$, ..., $100^m$) unter einander in Reihe geschaltet sind, umfasst, und
- für mindestens eine, insbesondere für jede Speicheranordnung, ein Ausgleichssystem ($300^j$) nach einem der vorhergehenden Ansprüche.

17. Elektro- oder Hybridelektrofahrzeug, umfassend ein oder mehrere wiederaufladbare Module zur Speicherung von elektrischer Energie (900) nach dem vorhergehenden Anspruch.

18. Elektrische Anlage wie zum Beispiel eine elektrische Ladestation für Elektro- oder Hybridelektrofahrzeuge oder Station zur Stromversorgung eines Gebäudes, eines Gebäudekomplexes oder eines elektrischen/elektronischen Kommunikationsgerätes, oder eine Regelungs- oder Glättungsstation für elektrische Energie, umfassend ein oder mehrere, wiederaufladbare Module zur Speicherung von elektrischer Energie (900) nach Anspruch 16.

**Claims**

1. An analogue balancing system (200;300) for a rechargeable electrical energy storage assembly (100) comprising a plurality of capacitive-effect storage devices ($DC_1$, ..., $DC_n$) connected together in series, said system (200;300) comprising a balancing device ($202_i$;$302_i$) for each storage device ($DC_i$) comprising:

- a bypass circuit ($204_i$;$304_i$) of said storage device ($DC_i$), that can be actuated between a closed state and an open state, and
- a voltage comparator ($106_i$), called first comparator, arranged in order to actuate said bypass circuit ($204_i$; $304_i$) to an open or closed state, as a function of the voltage at the terminals of said storage device ($DC_i$) and a predetermined voltage, called balancing voltage ($V_{eq}$);

said system (200; 300) also comprising at least one other voltage comparator (206), called second comparator, arranged in order to actuate an open or closed state of the bypass circuit ($204_i$; $304_i$) of each storage device ($DC_i$), said system (200; 300) being **characterized in that** said second comparator is arranged in order to actuate an open, or closed, state of the bypass circuit [R1,Q1,R2,Q2] of each storage device as a function of:

- a voltage ($V_\Sigma$), called switch-off voltage, representative of a closed state of all the bypass circuits ($204_i$; $304_i$) of all the storage devices ($DC_i$) of said assembly (100), and
- the voltage at the terminals of each storage device ($DC_i$) of said assembly (100), or of the voltage at the terminals of said assembly (100).

2. The system (200;300) according to the preceding claim, **characterized in that** the second comparator (206) is referenced to the potentials at the terminals of the storage assembly (100), and is configured in order to supply at the output:

- in a first state : the lowest potential ($V_1^-$) at the terminals of the storage assembly (100); and
- in a second state : the highest potential ($V_n^+$) at the terminals of the storage assembly (100).

3. The system (200;300) according to any one of the preceding claims, **characterized in that** it comprises a weighted summer (400), receiving the voltage ($V_i^s$) supplied by each of the first comparators ($106_i$), and supplying a voltage ($V_\Sigma^S$) corresponding to a weighted sum of said voltages ($V_i^s$), said weighted sum voltage being used by the second comparator (206) in order to actuate all the bypass circuits ($204_i$;$304_i$).

4. The system (200;300) according to the preceding claim, **characterized in that** the weighted summer (400) is referenced to the potentials ($V_1^-$,$V_n^+$) at the terminals of the storage assembly (100), and supplies a weighted sum voltage ($V_\Sigma^S$) less than or equal to the difference between said potentials ($V_n^+$-$V_1^-$).

5. The system (200;300) according to any one of claims 3 or 4, **characterized in that** it also comprises:

- an additional branch at the input of the weighted summer, or

- a second summer (500) at the output of the weighted summer (400);

introducing a voltage ($k\Delta V^+$), called compensation voltage, corresponding to a voltage offset introduced at the level of at least one, and in particular all, the first comparators (106i).

6. The system (200;300) according to any one of the preceding claims, **characterized in that** it comprises a means (600) supplying the switch-off voltage ($V_\Sigma$) as a function of the voltage at the terminals of the storage assembly (100), and optionally of a voltage (5V) representing a safety margin.

7. The system (200;300) according to the preceding claim, **characterized in that** the means supplying the switch-off voltage ($V_\Sigma$) comprises a subtractor (600), referenced to the potentials ($V_1^-, V_n^+$) at the terminals of the storage assembly (100), supplying the switch-off voltage ($V_\Sigma$) as a function of the voltage at the terminals of the storage assembly (100) and the voltage (5V) representing a safety margin.

8. The system (200; 300) according to any one of the preceding claims, **characterized in that** for at least one, in particular each, storage device ($DC_i$), the first comparator ($106_i$) of the balancing device ($202_i$; $302_i$) of said storage device ($DC_i$) is referenced to the potentials ($V_i^-, V_i^+$) at the terminals of said storage device ($DC_i$).

9. The system (200;300) according to any one of the preceding claims, **characterized in that** at least one of the first and second comparators (106i,206) is a hysteresis comparator.

10. The system (200) according to any one of the preceding claims, **characterized in that** at least one, in particular each, bypass circuit ($204_i$) comprises two switches ($Q_i, Q_i'$), mounted in series in said bypass circuit ($204_i$), one ($Q_i$) actuated as a function of the voltage ($V_i^s$) supplied by the first comparator ($106_i$) and the other ($Q_i'$) actuated as a function of the voltage ($V_c^s$) supplied by the second comparator (206).

11. The system (300) according to any one of the preceding claims, **characterized in that** at least one, in particular each, bypass circuit ($304_i$) comprises a single switch ($Q_i$), the balancing device ($302_i$) further comprising a control means ($J_i$) of said single switch ($Q_i$), as a function of the voltages ($V_i^s, V_c^s$) supplied by the first and second comparators (106i, 206).

12. The system (300) according to the preceding claim, **characterized in that** the control means ($J_i$) comprises:

   - a transistor that is off by default, for example a bipolar transistor of the NPN type, in particular when the second comparator (206) is an inverting comparator, or
   - a transistor that is on by default, for example a bipolar transistor of the PNP type, in particular when the second comparator (206) is a non-inverting comparator.

13. The system (200; 300 according to any one of the preceding claims, **characterized in that** it also comprises a device (700; 800) for monitoring the operation of said system (200; 300) as a function of the voltage ($V_c^s$) supplied by the second comparator (206).

14. The system (300) according to any one of claims 11 or 12, **characterized in that** it comprises a device for monitoring the operation of said system (300) as a function of the control voltages ($V_i^c$) of said single switches ($Q_i$) of all the bypass circuits ($304_i$).

15. The system (300) according to any one of claims 11 or 12, **characterized in that** it comprises a device for monitoring (800) the operation of said system (300) as a function of:

   - the control voltage ($V_i^c$) of said single switch ($Q_i$), and
   - the voltage ($V_i^s$) supplied by the first comparator ($106_i$);

of each balancing device ($302_i$).

16. A rechargeable electrical energy storage module (900) comprising:

   - at least one rechargeable electrical energy storage assembly ($100^1, ..., 100^m$), each comprising a plurality of capacitive-effect electrical energy storage devices connected together in series within said assembly ($100^1, ...,$

100$^m$), and
- for at least one, in particular each, storage assembly, a balancing system (300$^j$) according to any one of the preceding claims.

17. An electric or hybrid transport vehicle comprising one or more rechargeable electrical energy storage module(s) (900) according to the preceding claim.

18. An electrical installation, such as an electrical charging station for electric or hybrid transport vehicles, or an electrical supply station of a building, a complex or an electric/electronic communication device, or a regulating or smoothing station for electrical energy, comprising one or more rechargeable electrical energy storage module(s) (900) according to claim 16.

# FIG. 1a : Art Antérieur

# FIG. 1b : Art Antérieur

**FIG. 2**

**FIG. 3**

**FIG. 4**

**FIG. 5**

**FIG. 6**

**FIG. 7**

**FIG. 8**

**FIG. 9**

**FIG. 10a**

**FIG. 10b**

**FIG. 10c**

**FIG. 10d**

**RÉFÉRENCES CITÉES DANS LA DESCRIPTION**

**Documents brevets cités dans la description**

- EP 1583200 A1
- EP 3051659 A1
- US 2004251934 A1